# EUROPÄISCHE PATENTANMELDUNG

(11) **EP 4 604 383 A1**
(43) Veröffentlichungstag der Anmeldung: **20.08.2025**
(21) Anmeldenummer: 24158181.8
(22) Anmeldetag: 16.02.2024
(51) Int. Cl.: H02P 6/28, H02P 23/16, H02P 23/26

(54) **VERFAHREN UND EINRICHTUNG ZUR ANSTEUERUNG EINES BÜRSTENLOSEN GLEICHSTROMMOTORS**

(71) Anmelder: Hilti Aktiengesellschaft, 9494 Schaan (LI)
(72) Erfinder: Scherbaum, Markus, 86853 Gennach (DE)
(74) Vertreter: Hilti Aktiengesellschaft Corporate Intellectual Property

(57) **Zusammenfassung**

Die Erfindung betrifft ein Verfahren sowie eine elektronische Einrichtung zur Ansteuerung eines bürstenlosen Gleichstrommotors, welcher an einem Wechselstromnetz mit einem passiven Gleichrichter leistungsfaktorkorrekturfilterungsfrei betrieben wird, wobei der Gleichstrommotor nach Maßgabe einer kaskadierten Regelung betrieben wird, indem ein innerer Motorstromregler von einem äußeren Drehzahlregler überlagert wird, wobei zu einem Sollwert des Motorstroms ein Modulationssignal hinzuaddiert wird, um den amplitudenmodulierten Sollwert als Führungsgröße des Motorstromreglers zu verwenden.

## Beschreibung

Die vorliegende Erfindung betrifft ein Verfahren zur Ansteuerung eines bürstenlosen Gleichstrommotors, welcher an einem Wechselstromnetz mit einem passiven Gleichrichter ohne Leistungsfaktorkorrekturfilterung betrieben wird. Daneben betrifft die Erfindung auch eine elektronische Einrichtung zur Durchführung eines solchen Verfahrens, ein das Verfahren verkörperndes Computerprogrammprodukt sowie auch ein netzbetriebenes Elektrohandwerkzeug, welches mit einer erfindungsgemäßen elektronischen Einrichtung ausgestattet ist.

Das Einsatzgebiet der Erfindung erstreckt sich vornehmlich auf Elektrohandwerkzeuge, wie beispielsweise Elektroschrauber, Bohrhämmer, Meißelhämmer und dergleichen, welche ihre elektrische Energieversorgung über das normale Haushaltsstromnetz per Netzkabel beziehen.

Elektrohandwerkzeuge der hier interessierenden Art sind mit einem bürstenlosen Gleichstrommotor als Antriebseinheit ausgestattet. Diese Konfiguration erfordert eine Gleichrichtung der zugeführten elektrischen Energie. Aus dynamischer Perspektive erfordert eine Belastung des Gleichstrommotors, dass das antreibende Drehmoment dem Belastungsdrehmoment entspricht, wenn sich das dynamische System in einem eingeschwungenen, stationären Zustand befinden soll. Die Motordrehzahl wird nicht abgebremst oder beschleunigt; der Gleichstrommotor hält seine Solldrehzahl.

### Stand der Technik

Gemäß dem allgemein bekannten Stand der Technik wird für einen solchen stationären Zustand ein konstanter Motorstrom in den Gleichstrommotor eingeprägt, womit ein entsprechend konstantes Drehmoment erreicht wird.

Die WO 2018/080508 A1 offenbart eine elektronische Einrichtung zur Ansteuerung eines bürstenlosen Gleichstrommotors. Die Ansteuerung umfasst ein Fehlerkommunikationssystem in Habbrücken-Wechselrichtermodulen für den Betrieb eines mehrphasigen Gleichstrommotors oder Synchronmotors.

Gewöhnlich wird die Netzspannung über einen Gleichrichter und einen Gleichspannungs-Zwischenkreis mit Elektrolytkondensatoren als Energiespeicher und zur Glättung der Zwischenkreisspannung aufbereitet. Dabei werden das Wechselstromnetz und der Zwischenkreis mithilfe von Gleichrichterdioden aufeinander geschaltet. Das führt zu impulsartigen Ladeströmen, die als Rückwirkung das Wechselstromnetz belasten, insbesondere hinsichtlich eines erhöhten Effektivstroms und es reduziert sich unter Umständen die Lebensdauer des Frequenzumrichters. Ein weitgehend netzrückwirkungsfreier Betrieb wird gewöhnlich durch Vorschaltung einer so genannten Leistungsfaktorkorrekturfilter-Stufe (PFC-Stufe) zur Ladung des Zwischenkreiskondensators erzielt, was im Zusammenhang mit Gleichstrommotoren im Übrigen auch Drehmomentschwankungen aufgrund von Interferenzen zwischen Netz- und Ausgangsfrequenz vermeidet. Dies erfordert jedoch einen entsprechend hohen technischen Aufwand und geht zu Lasten des Leistungsfaktors.

Es ist die Aufgabe der vorliegenden Erfindung ein Verfahren zur Ansteuerung eines bürstenlosen Gleichstrommotors hinsichtlich seiner Wirkleistung mit einfachen technischen Mitteln zu verbessern.

### Offenbarung der Erfindung

Die Aufgabe wird ausgehend von einem Verfahren gemäß dem Oberbegriff von Anspruch 1 in Verbindung mit dessen kennzeichnenden Merkmalen gelöst. Hinsichtlich einer das Verfahren ausführenden elektronischen Einrichtung wird auf Anspruch 6 verwiesen. Der Anspruch 9 beschreibt ein das Verfahren verkörperndes Computerprogramm oder Computerprogrammprodukt. Der Anspruch 10 ist im Hinblick auf eine bevorzugte Anwendung der erfindungsgemäßen Lösung auf ein diese beinhaltendes netzbetriebenes Elektrohandwerkzeug gerichtet. Die übrigen abhängigen Ansprüche geben vorteilhafte Weiterbildungen der Erfindung wieder.

Die Erfindung schließt die verfahrenstechnische Lehre ein, dass der Gleichstrommotor nach Maßgabe einer kaskadierten Regelung betrieben wird, indem ein innerer Motorstromregler von einem äußeren Drehzahlregler überlagert wird, wobei zu einem Sollwert des Motorstroms ein spezielles Modulationssignal hinzuaddiert wird, um den amplitudenmodulierten Sollwert als Führungsgröße des Motorstromreglers zu verwenden.

Mit anderen Worten wird bei dem erfindungsgemäßen Ansteuerverfahren der Motorstrom amplitudenmoduliert. Der Momentanwert des Motorstroms ist in einem Zeitfenster somit höher als der benötigte Motorstrom und in einem Zeitfenster geringer als der benötigte Motorstrom. Dabei muss vorzugsweise nur der Mittelwert des Motorstroms, der aus der Belastung resultierenden Drehmomentanforderung entsprechen, um eine optimalen Leistungsfaktor zu realisieren. Die Motorstromamplitude wird hierfür derart moduliert, dass der Verlauf des Motorstroms dem Verlauf der Zwischenkreisspannung ausgangsseitig des Gleichrichters folgt. Bei einem Augenblickswert einer hohen Zwischenkreisspannung wird ein erhöhter Motorstrom abgegeben; bei einer geringen Zwischenkreisspannung wird dagegen ein reduzierter Motorstrom abgegeben. Der Mittelwert des Motorstroms sollte durch die Modulation dabei nicht verändert werden. Eine PFC-Stufe kann bei der erfindungsgemäßen Lösung entfallen, wodurch der Leistungsfaktor verbessert wird.

Vorzugsweise wird das Modulationssignal aus einer gemessenen Zwischenkreisspannung durch eine Signalaufbereitung, umfassend Verstärkung und/oder Offset-Korrektur generiert. Da nur der Verlauf, also die Kurvenform, der Zwischenkreisspannung von Interesse ist, lässt sich die gemessene Spannung durch den mindestens einen Signalverarbeitungsschritt Verstärkung und/oder Offset-Korrektur hinreichend aufbereiten, um als Modulationssignal verwendet werden zu können.

Ebenfalls vorzugsweise sollte das Modulationssignal auf einen Mittelwert von Null eingestellt sein. Wenn der Mittelwert von Null abweicht, sollte der Sollwert des Motorstroms die Mittelwertabweichung durch einen Offset korrigieren. Dies ist beispielsweise durch einen Drehzahlregler mit Integralanteil, beispielsweise per PI-Regler, möglich. Entscheidend ist lediglich, dass der amplitudenmodulierte Sollwert des Motorstroms einen entsprechenden von Null abweichenden Mittelwert hat, welcher proportional zu der Belastung des Gleichstrommotors ist. Der benötigte Mittelwert kann von beiden Eingängen einer in der kaskadierten Regelung enthaltenen Summationsstelle gebildet werden. Die Summationsstelle vereint den Sollwert und den Motorstrom mit dem Modulationssignal.

### Detailbeschreibung anhand Zeichnung

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematische Blockschaltbilddarstellung einer elektronischen Einrichtung zur Ansteuerung eines bürstenlosen Gleichstrommotors,
- Fig.2: eine Blockschaltbilddarstellung der kaskadierten Regelstruktur der elektronischen Einrichtung,
- Fig. 3: eine Blockschaltbilddarstellung der Signalaufbereitung zur Erzeugung eines Modulationssignals für eine Amplitudenmodulation,
- Fig. 4: eine graphische Darstellung des amplitudenmodulierten Sollwerts des Motorstroms über die Zeit,
- Fig. 5: graphische Darstellungen verschiedener Regelungsparameter der Ansteuerung über die Zeit, und
- Fig. 6: eine graphische Darstellung verschiedener elektrischer Größen des Gleichstrommotors über die Zeit.

### Ausführungsbeispiel

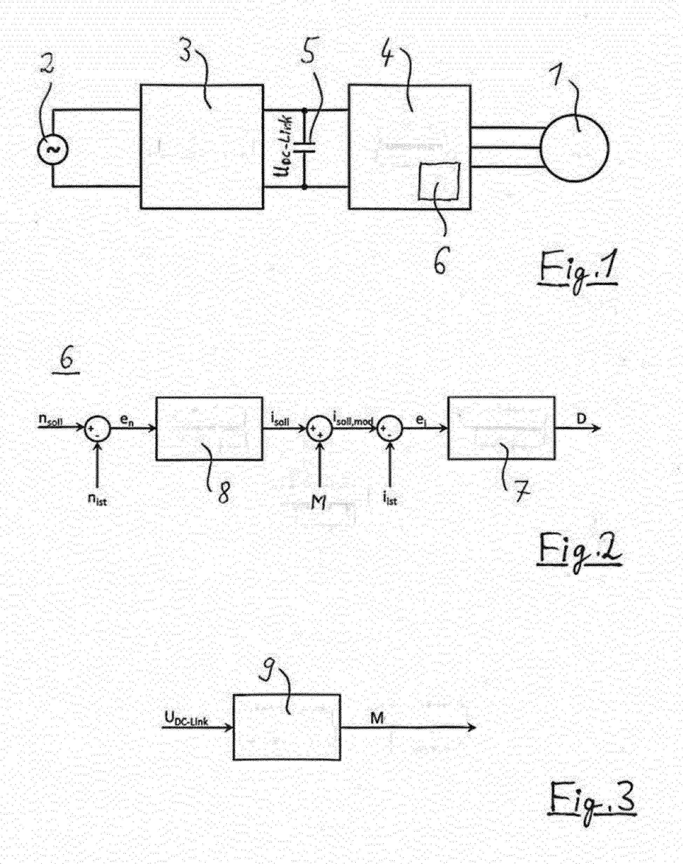

Gemäß Fig. 1 umfasst eine elektronische Einrichtung zur Ansteuerung eines bürstenlosen Gleichstrommotors 1, welcher an einem Wechselstromnetz 2 über einen passiven Gleichrichter 3 betrieben wird einen nachgeschalteten Motorinverter 4 zur Umwandlung des vom Gleichrichter 3 erzeugten Gleichstroms in einen für den Betrieb des Gleichstrommotors 1 erforderlichen mehrphasigen Wechselstrom. Dabei ist der Motorinverter 4 integraler Bestandteil des bürstenlosen Gleichstrommotors 1.

Die elektronische Einrichtung umfasst außerdem einen dem Gleichrichter 3 in Parallelschaltung zu dessen Anschlüssen nachgeschalteten Glättungskondensator 5, worüber eine Zwischenkreisspannung U_{DC-Link} gemessen wird. Die gemessene Zwischenkreisspannung U_{DC-Link} bildet die Grundlage zur Generierung des nachstehend näher beschriebenen Modulationssignals M für den erfindungsgemäß zu erzeugenden amplitudenmodulierten Sollwert.

Die Ansteuerung erfolgt über eine die nachfolgende Regelstruktur beinhaltende elektronische Ansteuereinheit 6, die mit in den vorstehend beschriebenen Motorinverter 4 integriert ist. Die Regelstruktur liegt in Form einer kaskadierten Regelung vor, welche aus einem inneren Motorstromregler 7 besteht, der von einem äußeren Drehzahlregler 8 überlagert wird. Der Drehzahlregler 8 regelt die Drehzahl des Gleichstrommotors nach Maßgabe einer aus einem vorgegebenen Sollwert der Drehzahl nₛₒₗₗ sowie einem Ist-Wert der Drehzahl nᵢₛₜ resultierenden Drehzahl-Regeldifferenz en. Der Drehzahlregler 8 generiert einen entsprechenden Sollwert des Motorstroms iₛₒₗₗ, zu welchem ein Modulationssignal M hinzuaddiert wird, woraus die Führungsgröße i_{soll, mod} des nachfolgenden Motorstromreglers 7 resultiert. Dem Motorstromregler 7 wird eine Motorstrom-Regeldifferenz eᵢ vorgegeben, welche aus dem besagten amplitudenmodulierten Sollwert i_{soll, mod} sowie eines gemessenen Istwerts iᵢₛₜ des Motorstroms resultiert. Als Stellsignal gibt der Motorstromregler 7 ein pulsweitenmoduliertes Ansteuersignal D aus.

Gemäß Fig. 3 wird das Modulationssignal M zur Erzeugung des vorstehend erwähnten und erfindungsgemäßen amplitudenmodulierten Sollwerts i_{soll, mod} im Rahmen einer Signalaufbereitung 9 erzeugt, wobei die gemessene Zwischenkreisspannung U_{DC-Link} durch Verstärkung und/oder Offset-Korrektur aufbereitet wird.

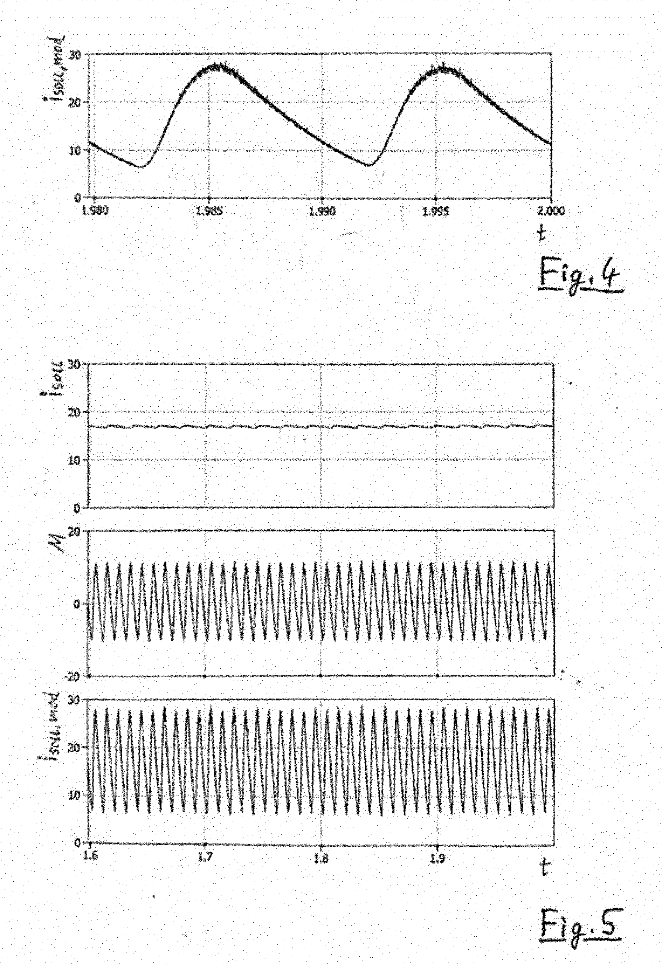

Gemäß Fig. 4 kann der Verlauf des erfindungsgemäß amplitudenmodulierten Sollwerts i_{soll, mod} sinus- bis sägezahnförmig aussehen, wobei der Mittelwert des Sollwerts i_{soll, mod} hier zirka 17 Ampere beträgt.

Nach Fig. 5 setzt sich der amplitudenmodulierte Sollwert i_{soll, mod} aus der Summe des vom Drehzahlregler 8 im Rahmen der kaskadierten Regelung vorgegebenen Sollwerts iₛₒₗₗ des Motorstroms und dem Modulationssignal M zusammen, welches - wie vorstehend beschrieben - aus der gemessenen Zwischenkreisspannung U_{DC-Link} generiert wurde. Der Drehzahlregler gibt hier den näherungsweise konstanten Sollwert iₛₒₗₗ des Motorstroms aus, auf die das Modulationssignal M mit dem Mittelwert Null hinzuaddiert wird. So wird sichergestellt, dass bei der Führungsgröße i_{soll, mod} des Motorstromreglers im Mittelwert der Motorstromanforderung der aktuellen Belastung entspricht, hier ein iₛₒₗₗ von 17 Ampere.

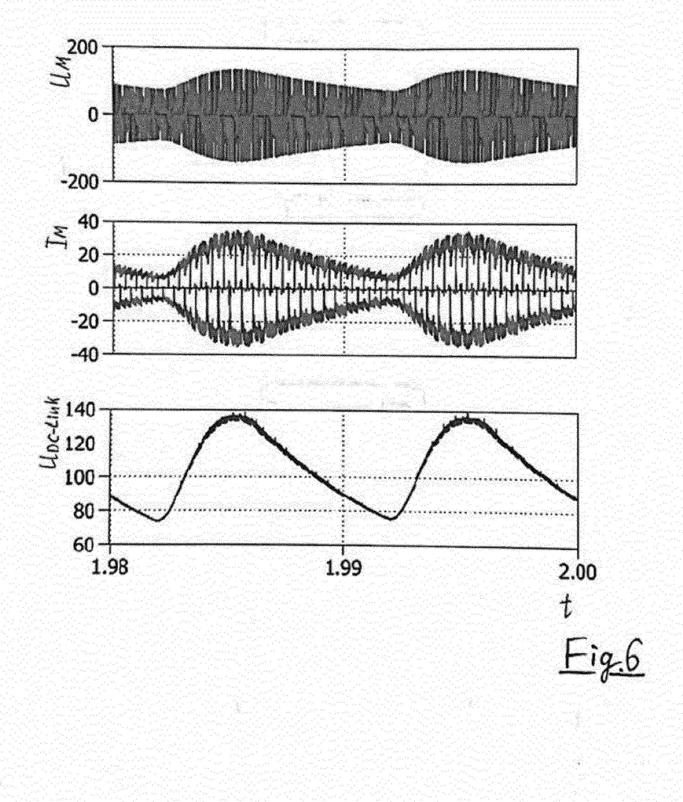

Die Fig. 6 veranschaulicht den Verlauf der gemessenen Zwischenkreisspannung U_{DC-Link}, welche sich im Verlauf der einhüllenden der Motorphasenströme I_{M} (vereinfacht) sowie auch der Motorspannungen der drei Phasen U_{M} wiederfindet.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es neben der Umsetzung des erfindungsgemäßen Verfahrens in Form eines Computerprogramms auch möglich, mit Hilfe von diskreten Bauelementen die erfindungsgemäße Signalverarbeitung innerhalb der kaskadierten Regelung umzusetzen.

### Bezugszeichenliste

- 1: Gleichstrommotor
- 2: Wechselstromnetz
- 3: Gleichrichter
- 4: Motorinverter
- 5: Glättungskondensator
- 6: Ansteuereinheit
- 7: Motorstromregler
- 8: Drehzahlregler
- 9: Signalaufbereitung

- nₛₒₗₗ: Sollwert der Drehzahl
- nᵢₛₜ: Istwert der Drehzahl
- eₙ: Drehzahl-Regeldifferenz
- iₛₒₗₗ: Sollwert des Motorstroms
- i_{soll, mod}: Sollwert des modulierten Motorstroms
- iᵢₛₜ: Istwert des Motorstroms
- eᵢ: Motorstrom-Regeldifferenz
- D: pulsweitenmoduliertes Signal
- M: Modulationssignal
- U_{DC-Link}: Zwischenkreisspannung

## Patentansprüche

1. Verfahren zur Ansteuerung eines bürstenlosen Gleichstrommotors (1), welcher an einem Wechselstromnetz (2) mit einem passiven Gleichrichter (3) leistungsfaktorkorrekturfilterungsfrei betrieben wird, **dadurch gekennzeichnet, dass** der Gleichstrommotor (1) nach Maßgabe einer kaskadierten Regelung betrieben wird, indem ein innerer Motorstromregler (7) von einem äußeren Drehzahlregler (8) überlagert wird, wobei zu einem Sollwert (iₛₒₗₗ) des Motorstroms ein Modulationssignal (M) hinzuaddiert wird, um den amplitudenmodulierten Sollwert (i_{soll, mod}) als Führungsgröße des Motorstromreglers (7) zu verwenden.

2. Verfahren nach Anspruch 1,
**dadurch gekennzeichnet, dass** das Modulationssignal (M) aus einer gemessenen Zwischenkreisspannung (U_{DC-Link}), umfassend Verstärkung und/oder Offsetkorrektur, durch eine Signalaufbereitung (9) generiert wird.

3. Verfahren nach Anspruch 1,
**dadurch gekennzeichnet, dass** die Amplitudenmodulation derart durchgeführt wird, dass der Mittelwert des Motorstroms der von einer Belastung des Gleichstrommotors (1) resultierenden Drehmomentanforderung entspricht.

4. Verfahren nach Anspruch 1,
**dadurch gekennzeichnet, dass** das Modulationssignal (M) auf einen Mittelwert von Null eingestellt wird.

5. Verfahren nach Anspruch 1,
**dadurch gekennzeichnet, dass** eine Nullwertabweichung des Modulationssignals (M) durch den Drehzahlregler (8) mit Integralanteil korrigiert wird.

6. Elektronische Einrichtung zur Ansteuerung eines bürstenlosen Gleichstrommotors (1), welcher an einem Wechselstromnetz (2) mit einem passiven Gleichrichter (3) leistungsfaktorkorrekturfilterungsfrei betrieben wird, **dadurch gekennzeichnet, dass** eine Ansteuereinheit (6) vorgesehen ist, die dazu eingerichtet ist, den Gleichstrommotor (1) nach Maßgabe einer kaskadierten Regelung derart zu betreiben, dass ein innerer Motorstromregler (7) von einem äußeren Drehzahlregler (8) überlagert wird, wobei zu einen Sollwert (iₛₒₗₗ) des Motorstroms ein aus einer Signalaufbereitung (9) resultierendes Modulationssignal (M) hinzuaddiert wird, um den amplitudenmodulierten Sollwert (i_{soll, mod}) als Führungsgröße des Motorstromreglers (7) zu verwenden.

7. Einrichtung nach Anspruch 1,
**dadurch gekennzeichnet, dass** dem Gleichrichter (3) ein Glättungskondensator (5) nachgeschaltet ist.

8. Einrichtung nach Anspruch 1,
**dadurch gekennzeichnet, dass** dem passiven Gleichrichter (3) ein dem bürstenlosen Gleichstrommotor (1) zugeordneter Motorinverter (4) zur Umwandlung des Gleichstroms in einen mehrphasigen Wechselstrom nachgeschaltet ist.

9. Computerprogramm, umfassend Befehle, die bei der Ausführung des Programms durch die Ansteuereinheit (6) der elektronischen Einrichtung nach einem der Ansprüche 6 bis 8 das Ansteuerverfahrens nach einem der Ansprüche 1 bis 5 auszuführen.

10. Netzbetriebenes Elektrohandwerkzeug mit mindestens einer als bürstenloser Gleichstrommotor (1) ausgebildeten Antriebseinheit, die eine elektronische Einrichtung nach einem der Ansprüche 6 bis 8 ansteuert.
